# EUROPEAN PATENT APPLICATION

(11) **EP 4 548 986 A1**
(43) Date of publication of application: **07.05.2025**
(21) Application number: 24207228.8
(22) Date of filing: 17.10.2024
(51) Int. Cl.: A63F 13/355, A63F 13/52, G06T 15/00, G06T 15/06

(54) **VIDEO IMAGE RENDERING IN CLOUD GAMING**

(30) Priority: 03.11.2023 GB 202316880
(71) Applicant: Sony Interactive Entertainment Europe Limited, London W1F 7LP (GB); Sony Interactive Entertainment LLC, San Mateo, CA 94404 (US)
(72) Inventor: GREEN, Laurence Martin, London W1F 7LP (GB); COLES, David, San Mateo, California 94404 (US); HUME, Oliver George, London W1F 7LP (GB); MOTILLA, Daniel Montero, London W1F 7LP (GB)
(74) Representative: Murgitroyd & Company

(57) **Abstract**

A computer implemented method of generating graphics video data for a computer game is disclosed. The method comprises receiving, from a remote device (601), first data including image data corresponding to a plurality of pixels of at least one frame of video data of the computer game. Second data, including colour data of a plurality of said pixels, and at least one frame of video data of the computer game based on the first and second data, are generated at a user device (602).

## Description

The present disclosure relates to rendering of image data, and relates particularly, but not exclusively, to rendering of video image data in cloud computer gaming apparatus.

In cloud computer gaming, a user apparatus receives data from a server, located remotely from the user apparatus, via a cloud such as the internet, and renders video image data of a computer game on a display connected to the user apparatus based on the data received from the server. The remote server updates the state of the computer game based on inputs from a controller used by a player of the game located at the user apparatus, wherein the user inputs are transmitted to the remote server by the user apparatus. It is often desirable for the user apparatus to then render the video image data by means of ray tracing, i.e. modelling where light bounces and reflects across a scene, and shading, in which colour data is added to the pixels of the video image data to provide various visual effects such as light reflection.

This arrangement can suffer from the drawback that ray tracing is a computationally expensive technique, which can limit responsiveness of the game.

Preferred embodiments of the disclosure seek to overcome the above disadvantage.

According to an aspect of the present disclosure, there is provided a computer implemented method of generating graphics video data for a computer game, the method comprising:-
receiving, from a remote device, first data including image data corresponding to a plurality of pixels of at least one frame of video data of the computer game;
generating, at a user device, second data including colour data of a plurality of said pixels; and
generating, at the user device, at least one frame of video data of the computer game based on the first and second data.

By generating, at the user device, video data of the computer game based on the first data, received from a remote device and including image data corresponding to a plurality of pixels of at least one frame of video data of the computer game, and second data, generated at a user device and including colour data of a plurality of said pixels, this provides the advantage of improving the computational efficiency of rendering of video image data.

The image data may represent a ray of light travelling from a feature of a scene represented by at least one frame of the video data of the computer game to a viewer of the scene, and the first data may include third data representing a number of interactions of said ray with features of the scene prior to travelling to the viewer.

The first data may be determined for a predetermined number of said interactions.

This provides the advantage of enabling computational efficiency to be further improved by avoiding transmission from the remote device to the user device of data relating to more than the predetermined number of interactions prior to reaching the viewer, which generally makes a much less significant contribution to the scene image.

The first data may include fourth data representing importance of a respective said interaction.

This provides the advantage of enabling a decision to be made at the user device which interactions make an important contribution and which can be disregarded, thereby further improving computational efficiency.

Whether to send at least some of said first data to the user device may be determined on the basis of said fourth data.

The second data may include shading data.

According to another aspect of the present disclosure, there is provided a computer implemented method of generating data for use in generating graphics video data for a computer game, the apparatus comprising:-
generating, at a server device, first data including image data corresponding to a plurality of pixels of at least one frame of video data of the computer game, wherein the first data is adapted to be combined, at a user device, with second data, generated at the user device, to generate at least one frame of video data of the computer game, wherein the second data includes colour data of a plurality of said pixels.

The image data may represent a ray of light travelling from a feature of a scene represented by a frame of the video data of the computer game to a viewer of the scene, and the first data may include third data representing a number of interactions of said ray with features of the scene prior to travelling to the viewer.

The method may further comprise determining said first data for a predetermined number of said interactions

The first data may include fourth data representing importance of a respective said interaction.

The method may further comprise determining whether to send at least some of said first data to the user device on the basis of said fourth data.

The second data may include shading data.

Embodiments of the disclosure will now be described, by way of example only and not in any limitative sense, with reference to the accompanying drawings, in which:-
Figure 1 shows schematically an example of a cloud gaming system of an embodiment of the present disclosure;
Figure 2 shows a flow diagram of a method of an embodiment of the present disclosure carried out by a server remote from a user apparatus;
Figure 3 shows a flow diagram of a method of an embodiment of the present disclosure carried out by a user apparatus;
Figure 4 shows schematically ray tracing of a scene using the method of Figures 2 and 3; and
Figure 5 illustrates a block diagram of one example implementation of a computing device for use in implementing an embodiment of the disclosure.

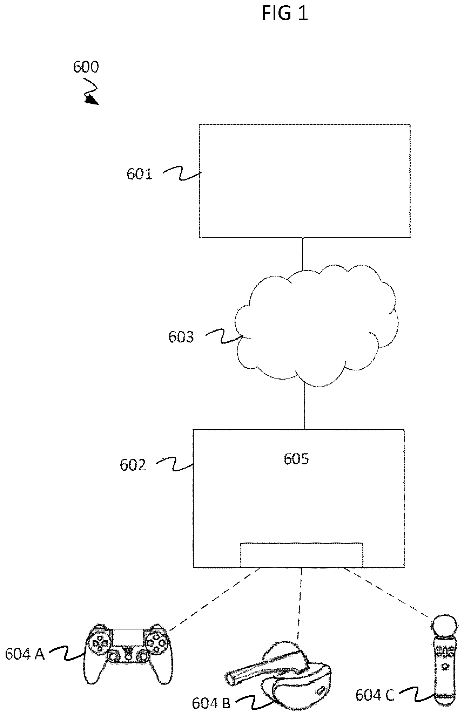

Figure 1 shows schematically an example of a cloud gaming system 600 that may be used in accordance with the present disclosure. In Figure 1, the cloud gaming system 600 is shown as comprising a server 601 that is in communication with a client device 602, having a display screen, via a communications network 603. The server 601 is configured to perform at least some of the rendering of an image.

The client device 602 may include, e.g. a video game playing device (games console), a smart TV, a set-top box, a smartphone, laptop, personal computer (PC), USB-streaming device, etc. The client device 602 may receive e.g. video frames from the server 601, via the communications network 603. In some examples, the client device 601 may receive image data from the server 601 and perform further processing on that image data. The client device may further comprise a VR/AR headset.

In Figure 1, the client device 602 is shown as being associated with a plurality of input devices 604A, 604B (headset), 604C (controller). It will be appreciated that the input devices 604A, 604B, 604C shown are merely illustrative examples and that a different number of, and / or different types of input devices may be provided. The input devices are in communication with the client device via a wired or wireless connection. In Figure 1, the client device 602 is shown as comprising a communication interface 605 for receiving user inputs generated at or via the input devices. It will be further appreciated that in some examples, user inputs may be generated at the client device 602 and not necessarily with a separate, standalone input device.

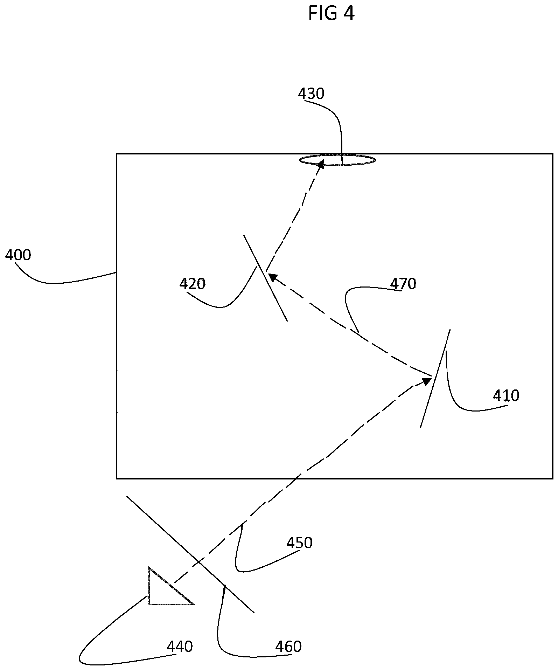

Referring to Figure 4, an example of a scene 400 having a first mirror 410, a second mirror 420, and a light source 430 is shown. A camera 440 sends a ray 450 into the scene 400, and the ray 450 passes through a 2-D image plane 460, which comprises pixels and is to be rendered from scene 400. The ray 450 can be viewed as passing through one of the pixels of plane 460, and is tested for intersection against objects constituting the scene 400 until it is determined to intersect with mirror 410.

The mirror 410 is associated with a shader describing its behaviour. For example, the mirror 410 reflects all light hitting it according to Snell's law. Since tracing occurs from the camera 440 towards a light, rather than vice versa, producing mirror-like behaviour requires determining a further ray to determine what light is hitting the intersection point at a reflection angle determined by an incident direction of ray 450 on mirror 410. In the example shown in Figure 4, ray 470 is determined, and intersection tested until determining a closest intersection (here, with mirror 420). A shader for mirror 420 is then implemented. Light source 430 can also be associated with a shader, wherein the shader indicates a colour for the light emitted by the shader.

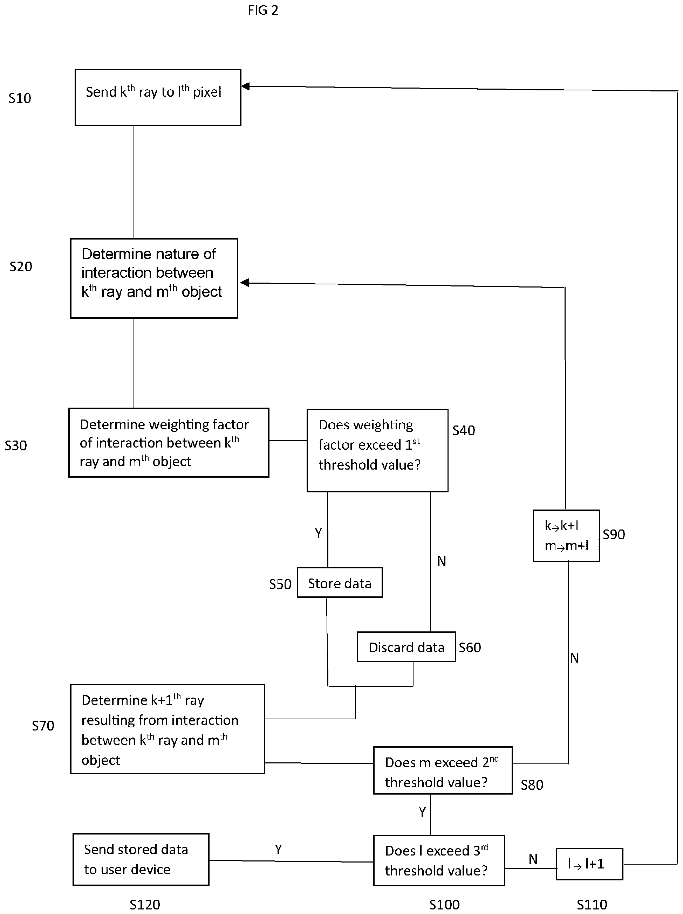

Figure 2 shows a ray tracing process to be carried out by remote server 602 of the arrangement of Figure 1. In step 510, a ray is sent from the camera 440 (the k^{th} ray) to the l^{th} pixel of the image plane 460 of the arrangement of Figure 4. At step S20, the nature of the first interaction between the k^{th} ray and an object (the m^{th}) in the scene 400 determined. A weighting factor representing the importance of the interaction determined in step S20 is then applied to the ray data in step S30. In step 540, a determination is made as to whether the weighting factor applied in step S30 exceeds a 1^{st} threshold value. If the weighting factor exceeds the 1^{st} threshold value, and is therefore considered to be of greater importance than a threshold value, the data is stored in step S50, or is discarded in step S60 if the weighting factor does not exceed the 1^{st} threshold value.

At step S70, the process determines the further ray (k+1^{th} ray) resulting from the interaction between the k^{th} ray and the m^{th} object determined in step 520. A determination is then made in step S80 as to whether m (the number of interactions of the ray passing through the l^{th} pixel with objects in the scene 400) exceeds a 2^{nd} threshold value. The 2^{nd} threshold value therefore represents a number of interactions considered to make a sufficient contribution to the final ray data, since the contribution of lighting to the final image is significantly reduced after a given number of interactions. If the number m of interactions does not exceed the 2^{nd} threshold value, counters are incremented at step S90 so that the nature of the interaction of the k+1^{th} ray with the m+1^{th} object is determined at step 520, and steps S20 to S90 are then repeated until m is determined at step S80 to exceed the 2^{nd} threshold value. When m is determined at step S80 to exceed the 2^{nd} threshold value, a determination is made in step S100 as to whether I exceeds a 3^{rd} threshold value, representing the total number of pixels in the image plane 460. If I does not exceed the 3^{rd} threshold value, a counter is incremented in step S110, and a ray 450 is then sent from the camera 440 to the l+1^{th} pixel and steps S10 to 5100 are repeated until ray data for all of the pixels in the image plane 460 has been obtained. When it is determined in step S100 that ray data for all of the pixels has been obtained, the pixel data stored in step S50 is then sent to the user device in step S120.

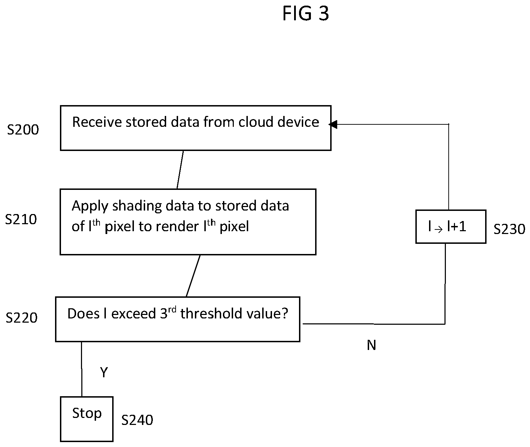

Referring to Figure 3, a shading operation carried out by the client device 602 (Figure 1) is shown. The client device 602 receives the stored ray tracing data (sent at step 5120 in Figure 2) via a cloud such as the internet. At step S210, shading data (i.e. colour data relating to each pixel) is applied to the ray tracing data on the basis of the weighting factor applied to the ray tracing data. At step S220, if l is determined not to exceed the 3^{rd} threshold value, a counter is incremented in step S230 so that steps S200 to S220 are repeated for each pixel in turn until it is determined in step S220 that the shading data has been added for all of the pixels, and the shading process then ends at step S240.

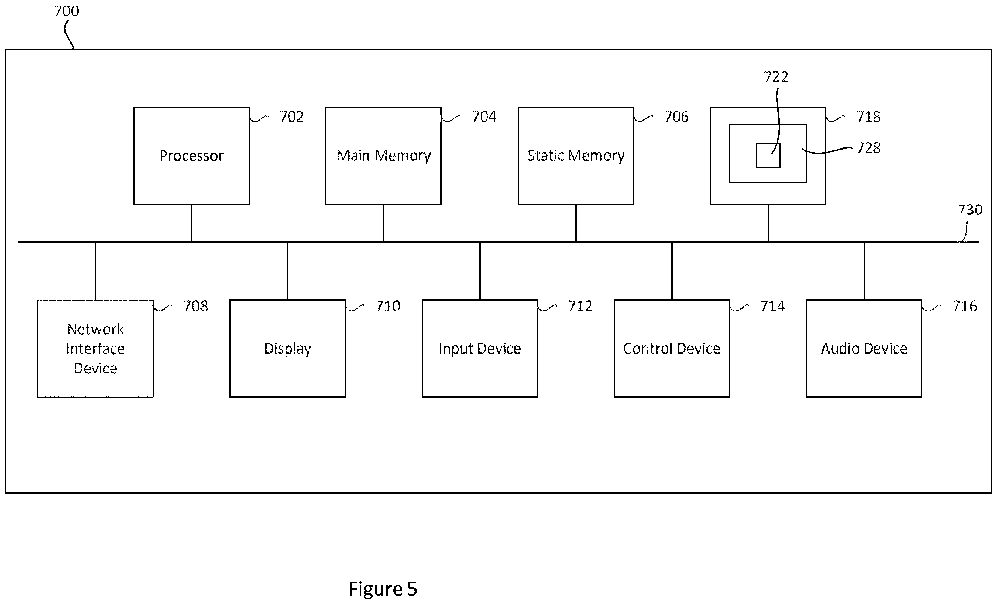

Figure 5 illustrates a block diagram of one example implementation of a computing device 700 that can be used for implementing the steps indicated in Figures 2 and 3 and explained throughout the detailed description. The computing device is associated with executable instructions for causing the computing device to perform any one or more of the methodologies discussed herein. The computing device 700 may operate in the capacity of the data model or one or more computing resources for implementing the data model for carrying out the methods of the present disclosure. In alternative implementations, the computing device 700 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 700 includes a processing device 702, a main memory 704 (e.g., read-only memory (ROM), flash memory, dynamic random-access memory (DRAM) such as synchronous DRAM (SDRAM) or Rambus DRAM (RDRAM), etc.), a static memory 706 (e.g., flash memory, static random-access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a light emitting diode (LED) display, a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims.

### Enumerated clauses

The following enumerated clauses aid a better understanding of the present disclosure and are not to be taken as limiting in any way.
1. A computer implemented method of generating graphics video data for a computer game, the method comprising:-
   receiving, from a remote device, first data including image data corresponding to a plurality of pixels of at least one frame of video data of the computer game;
   generating, at a user device, second data including colour data of a plurality of said pixels; and
   generating, at the user device, at least one frame of video data of the computer game based on the first and second data.
2. A method according to clause 1, wherein said image data represents a ray of light travelling from a feature of a scene represented by at least one frame of the video data of the computer game to a viewer of the scene, and the first data includes third data representing a number of interactions of said ray with features of the scene prior to travelling to the viewer.
3. A method according to clause 2, wherein said first data is determined for a predetermined number of said interactions.
4. A method according to clause 2 or 3, wherein the first data includes fourth data representing importance of a respective said interaction.
5. A method according to clause 4, wherein whether to send at least some of said first data to the user device is determined on the basis of said fourth data.
6. A method according to any one of the preceding clauses, wherein said second data includes shading data.
7. A computer implemented method of generating data for use in generating graphics video data for a computer game, the apparatus comprising:-
   generating, at a server device, first data including image data corresponding to a plurality of pixels of at least one frame of video data of the computer game, wherein the first data is adapted to be combined, at a user device, with second data, generated at the user device, to generate at least one frame of video data of the computer game, wherein the second data includes colour data of a plurality of said pixels.
8. A method according to clause 7, wherein said image data represents a ray of light travelling from a feature of a scene represented by a frame of the video data of the computer game to a viewer of the scene, and the first data includes third data representing a number of interactions of said ray with features of the scene prior to travelling to the viewer.
9. A method according to clause 8, further comprising determining said first data for a predetermined number of said interactions
10. A method according to clause 8 or 9, wherein the first data includes fourth data representing importance of a respective said interaction.
11. A method according to clause 10, further comprising determining whether to send at least some of said first data to the user device on the basis of said fourth data.
12. A method according to any one of clauses 7 to 11, wherein said second data includes shading data.

## Claims

1. A computer implemented method of generating graphics video data for a computer game, the method comprising:
receiving, from a remote device, first data including image data corresponding to a plurality of pixels of at least one frame of video data of the computer game;
generating, at a user device, second data including colour data of a plurality of said pixels; and
generating, at the user device, at least one frame of video data of the computer game based on the first and second data.

2. The method according to claim 1, wherein said image data represents a ray of light travelling from a feature of a scene represented by at least one frame of the video data of the computer game to a viewer of the scene, and the first data includes third data representing a number of interactions of said ray with features of the scene prior to travelling to the viewer.

3. The method according to claim 2, wherein said first data is determined for a predetermined number of said interactions.

4. The method according to claim 2, wherein the first data includes fourth data representing importance of a respective said interaction.

5. The method according to claim 4, wherein whether to send at least some of said first data to the user device is determined on the basis of said fourth data.

6. The method according to claim 1, wherein said second data includes shading data.

7. A computer implemented method of generating data for use in generating graphics video data for a computer game, the apparatus comprising:-
generating, at a server device, first data including image data corresponding to a plurality of pixels of at least one frame of video data of the computer game, wherein the first data is adapted to be combined, at a user device, with second data, generated at the user device, to generate at least one frame of video data of the computer game, wherein the second data includes colour data of a plurality of said pixels.

8. The method according to claim 7, wherein said image data represents a ray of light travelling from a feature of a scene represented by a frame of the video data of the computer game to a viewer of the scene, and the first data includes third data representing a number of interactions of said ray with features of the scene prior to travelling to the viewer.

9. The method according to claim 8, further comprising determining said first data for a predetermined number of said interactions

10. The method according to claim 8, wherein the first data includes fourth data representing importance of a respective said interaction.

11. The method according to claim 10, further comprising determining whether to send at least some of said first data to the user device on the basis of said fourth data.

12. The method according to claim 7, wherein said second data includes shading data.
